# NEUE EUROPÄISCHE PATENTSCHRIFT

(11) **EP 2 113 742 B2**
(45) Veröffentlichungstag und Bekanntmachung des Hinweises auf die Entscheidung über den Einspruch: **02.01.2019**
(45) Hinweis auf die Patenterteilung: 18.11.2015
(21) Anmeldenummer: 08008308.2
(22) Anmeldetag: 30.04.2008
(51) Int. Cl.: G01B 21/22, G01D 5/56, G01D 5/58, G01D 5/14, G01D 5/347

(54) **Messvorrichtung mit Zwei-Kanal-Abtastung**
Measuring device with dual channel scanning
Dispositif de mesure doté d'un balayage à deux canaux

(43) Veröffentlichungstag der Anmeldung: 04.11.2009
(73) Patentinhaber: Baumer Electric AG, 8501 Frauenfeld (CH)
(72) Erfinder: Brügger, Peter, 8500 Frauenfeld (DE); Schneider, Michael, 78462 Konstanz (DE); Tarraf, Amer, 8280 Kreuzlingen (CH)
(74) Vertreter: Grünecker Patent- und Rechtsanwälte PartG mbB

(56) Entgegenhaltungen:
- EP-A- 1 571 426
- EP-A1- 1 378 763
- EP-A2- 2 020 591
- WO-A-2005/078403
- DE-A1- 4 439 233
- DE-A1- 10 251 350
- DE-A1- 19 520 299
- DE-B4- 19 638 911
- DE-C1- 4 430 833
- JP-A- 10 239 104

## Beschreibung

Die vorliegende Erfindung betrifft eine Messvorrichtung zur Ermittlung der Position und/oder des Drehwinkels eines Körpers der eine Translations- und/oder Rotationsbewegung ausführt, insbesondere einen Drehgeber zur Messung der Drehung einer um eine Drehachse drehbaren Welle und weiterhin insbesondere eine Zwei-Kanal-Abtastung einer drehbaren Welle zur sicheren Bestimmung des Drehwinkels der Welle.

Messvorrichtungen wie Drehgeber zur Bestimmung von Winkelpositionen bewegter Achsen bzw. Wellen durch berührungslose Single- oder Multiturn-Abtastung finden bereits allgemein zur Überwachung und Steuerung mechanischer Bewegungsabläufe Anwendung. Beispielsweise werden Drehgeber für die Drehzahlerfassung und Steuerung von Motoren, Steuerung oder Regelung von Förderanlagen oder die Überwachung von Förderbändern eingesetzt. In jüngster Zeit sind jedoch die Anforderungen an die Genauigkeit und insbesondere Zuverlässigkeit der Drehgeber enorm gestiegen, um modernen Sicherheitsstandards und Steuerungsaufgaben in Anlagen- und Maschinenbauanwendungen Genüge leisten zu können.

Verschmutzungen und/oder Verschleißeffekte können bei den mitunter hinsichtlich der Umgebungsbedingungen sehr anspruchsvollen Anwendungen für Drehgeber zu nicht tolerierbaren Fehlmessungen oder gar einem partiellen oder totalen Ausfall eines Drehgebers führen. Daher besteht eine dringliche Notwendigkeit, die Verlässlichkeit bestehender Drehgebersysteme zu verbessern, ohne jedoch ökonomische und konstruktionstechnische Bedingungen außer Acht zu lassen.

Im Stand der Technik sind zweikanalige Drehgebersysteme bekannt, die zwei getrennte Messeinrichtungen für ein und dieselbe Welle verwenden, um die Sicherheit durch eine redundante Messung des Drehwinkels zu erhöhen. Ein solches Drehgebersystem ist im Dokument WO-A-2005/078403 offenbart. Der technische Aufwand sowie die Kosten für ein Drehgebersystem werden dadurch freilich signifikant erhöht. Auch kann konstruktionstechnisch die Verbauung mehrerer Gehäuse für einzelne Messeinrichtungen nachteilig oder geradezu unmöglich sein. Die DE 195 20 299 A1 betrifft einen Drehgeber mit einer optischen und einer magnetischen Sensorvorrichtung, die Ausgangssignale an einen Mikrocontroller liefern. Beim Einschalten wird zunächst der Drehwinkel anhand der magnetischen Sensorvorrichtung ermittelt, nach dem Überfahren einer Referenzmarke der optischen Sensorvorrichtung durch die genauere optische Sensorvorrichtung. Zur Erfassung von Fehlern werden die Ausgangssignale des optischen und des magnetischen Systems laufend miteinander verglichen. Fällt eine der Sensorvorrichtungen aus, kann der Drehwinkel von der anderen Sensorvorrichtung weiter erfasst werden.

Es ist somit eine der vorliegenden Erfindung zugrunde liegende Aufgabe, eine Drehgebervorrichtung zur Verfügung zu stellen, die eine erhöhte Zuverlässigkeit der erhaltenen Messwerte unter Wahrung einer möglichst einfachen und wenig hindernden Konstruktion und Verbaubarkeit aufweist.

Die oben genannte Aufgabe wird durch die Drehgebervorrichtung zur Abtastung einer drehbaren Welle gemäß Anspruch 1 gelöst.

Der Begriff der Welle umfasst hierin eine drehbare, rein mechanisch oder elektrisch antreibbare Achse und ebenso allgemein einen jeglichen drehbaren geradlinigen, krummlinigen oder helischen Voll- oder Hohlkörper, deren oder dessen Drehwinkel von der Messeinrichtung erfasst wird. Die Welle kann beispielsweise eine Hohlwelle oder Vollwelle sein. Die magnetfelderzeugende Einrichtung kann beispielsweise ein Permanentmagnet oder eine ein Magnetfeld erzeugende Spule sein. Im Weiteren wird synonym zu dem Begriff der magnetfelderzeugenden Einrichtung auch der einfachere Begriff des Magneten verwendet.

Zudem versteht sich, dass der von der Signalverarbeitungseinrichtung auf der Grundlage der ersten Daten von der Magnetsensoreinrichtung ermittelte erste Drehwinkel nicht exakt mit dem auf der Grundlage der zweiten Daten von der Magnetsensoreinrichtung ermittelten zweiten Drehwinkel übereinzustimmen braucht, da die Sensoreinrichtungen unterschiedliche Genauigkeiten und/oder Fehlertoleranzen aufweisen können.

Der wirkliche Drehwinkel der Welle kann somit erfindungsgemäß zweimal und unabhängig voneinander, namentlich einerseits mithilfe einer magnetischen Sensoreinrichtung und andererseits mithilfe einer optischen Sensoreinrichtung und somit auf physikalisch unterschiedlichen Prinzipien basierend, ermittelt werden. Die Daten der optischen Sensorrichtung werden der Signalverarbeitungseinrichtung auf einem von mindestens zwei Datenkanälen eingegeben, und die Daten der Magnetsensoreinrichtung werden der Signalverarbeitungseinrichtung auf einem anderen der mindestens zwei Datenkanäle eingegeben.

Bei Ausfall oder Beeinträchtigung einer der Sensoreinrichtungen kann somit mithilfe der anderen Sensoreinrichtung die erforderliche Information über den Drehwinkel der Welle zur Verfügung gestellt werden. Zudem kann die Verlässlichkeit der Messungen durch ständigen Abgleich der auf der Grundlage der ersten Daten und der Grundlage der zweiten Daten ermittelten Werte für den Drehwinkel der Welle gewährleistet werden. Insbesondere sollten im fehlerfreien Betrieb die Werte für den ermittelten Drehwinkel jeweils (also auf Grundlage der Daten der optischen Sensoreinrichtung einerseits und auf der Grundlage der Daten der magnetischen Sensoreinrichtung andererseits) innerhalb vorbestimmter Fehlertoleranzen liegen.

Es ist hierbei von besonderer Bedeutung, dass der Drehwinkel auf zweierlei verschiedene Arten, d.h. basierend auf zwei verschiedenen physikalischen Messvorgängen, ermittelt wird, so dass systematische Fehler, die durch eine physikalische Messmethode bedingt sind, durch die andere Messmethode kompensiert werden können. Während in dieser Beschreibung detaillierte auf die Kombination einer magnetischen und optischen Sensoreinrichtung eingegangen wird, sind auch andere Kombinationen zweier oder mehrerer Sensoreinrichtungen gemäß der Erfindung möglich, solange diese eine Messung des Drehwinkels einer Welle basierend auf verschiedenen physikalischen Messmethoden realisieren (s. auch unten).

Die Signalverarbeitungseinrichtung der hier offenbarten Drehgebervorrichtung zur Abtastung einer drehbaren Welle kann einen in Bezug auf eine Ausgangswinkellage der Welle relativen Drehwinkel der Welle und/oder einen in Bezug auf eine Ausgangswinkellage der Welle absoluten Drehwinkel der Welle bestimmen. Der relative Winkel ist hierbei der, beispielsweise inkremental gemessene, Winkel in Drehrichtung der Welle gemessen von der Ausgangswinkellage innerhalb einer vollständigen Drehung um 360°, während der absolute Winkel die Gesamtzahl der vollständigen Drehungen beinhaltet. Wenn sich die Welle von der Ausgangswinkellage aus genau zweimal um ihre Drehachse gedreht hat, beträgt der wirkliche relative Winkel also 0° und der wirkliche absolute Winkel 720°. Hierbei kann die jeweilige Sensoreinrichtung (optisch und magnetisch) oder die Signalverarbeitungseinrichtung Mittel zur Bestimmung der Anzahl vollständiger Umdrehungen der abgetasteten Welle umfassen.

Eine besonders kompakte Konstruktion erlaubt eine Weiterbildung, in der die Drehgebervorrichtung ein Gehäuse umfasst, in dem sowohl die Magnetsensoreinrichtung als auch die optische Sensoreinrichtung angeordnet sind.

Gemäß einer vorteilhaften Weiterbildung umfasst die erfindungsgemäße Drehgebervorrichtung weiterhin eine Auswahleinrichtung, die dazu ausgebildet ist, die Signalverarbeitungseinrichtung dazu zu veranlassen, den Drehwinkel der Welle wahlweise aus den empfangenen ersten Daten und/oder den empfangenen zweiten Daten zu ermitteln.

Die magnetische und die optische Sensoreinrichtung weisen unterschiedliche Vorteile und Nachteile auf. So kann nach Maßgabe beispielsweise der aktuellen Betriebsbedingungen (Temperatur, Störeinflüsse, Einsatzdauer, usw.) eines der Verfahren im Allgemeinen zuverlässiger als das andere arbeiten.

Die magnetische Sensoreinrichtung ist beispielsweise relativ unempfindlich gegenüber lokalen Schmutzablagerungen und Stößen auf der Welle. Hingegen können magnetische Störfelder die Genauigkeit der Messung negativ beeinflussen. Auf der anderen Seite kann die Messgenauigkeit des Drehwinkels mithilfe der mit der Welle ortsfesten Codescheibe bei unregelmäßigen Stößen der Welle und Schmutzablagerungen auf der Welle leiden. Wenn solche Störungen nicht vorliegen, erlauben sehr feine Strichcodes, die auf einer Codescheibe aus einem Glas-, Kunststoff- oder Metallmaterial aufgedampft, geätzt oder gedruckt werden können, hohe Messauflösungen.

Die Auswahleinrichtung ist erfindungsgemäß dazu ausgebildet, die Signalverarbeitungseinrichtung aufgrund ermittelter Betriebszustände, nämlich der Temperatur, der Versorgungsspannung oder der Betriebsdauer zumindest der Magnetsensoreinrichtung oder der optischen Sensoreinrichtung, dazu zu veranlassen, wahlweise den Drehwinkel der Welle aus den empfangenen ersten Daten und/oder den empfangenen zweiten Daten zu ermitteln. Hierfür können auch Detektionseinrichtungen zur Überprüfung des Lichtstrahls der optischen Sensoreinrichtung bzw. der Stärke des von dem Magneten erzeugten Magnetfelds vorgesehen sein. Auch können natürlich Daten über den Lichtstrahl und das Magnetfeld durch die optische und Magnetsensoreinrichtung an die Auswahleinrichtung übermittelt werden.

So kann vorteilhafter Weise die Drehgebervorrichtung eine Betriebsbedingungsbestimmungseinrichtung zur Bestimmung von Betriebsbedingungen, wie Schmutzablagerungen oder die Last der Welle (z. B. über die ermittelte Drehzahl eines Motors), allgemeinen mechanischen Parametern, aber auch Daten zu Fertigungstoleranzen zur Anpassungsmöglichkeit an Fehlmontagen, umfassen, und es kann dann die Auswahleinrichtung so ausgebildet sein, dass sie auf der Grundlage der von der Betriebsbedingungsbestimmungseinrichtung gelieferten Daten die Signalverarbeitungseinrichtung dazu veranlasst, den Drehwinkel der Welle aus den empfangenen ersten Daten, den empfangenen zweiten Daten oder sowohl aus den empfangenen ersten als auch den empfangenen zweiten Daten zu ermitteln.

Weiterhin kann die Betriebsbedingungsbestimmungseinrichtung die Auswahleinrichtung mit Daten darüber versehen, unter welchen Umständen welche der optischen und Magnetsensoreinrichtung zur weiteren Datenverarbeitung zu verwenden ist. Hierbei kann die insbesondere Informationen über Fehlertoleranzen und deren einhalten an die Auswahleinrichtung übermitteln.

Die Betriebsbedingungsbestimmungseinrichtung ist somit dazu ausgebildet, Betriebsbedingungsdaten zu gewinnen, mit denen die Auswahleinrichtung steuerbar ist.

In einer vorteilhaften Weiterbildung umfasst die Drehgebervorrichtung, eine Betriebsbedingungsbestimmungseinrichtung, die derart ausgebildet ist, dass sie aus einem Vergleich des aus den ersten Daten ermittelten Drehwinkels und aus den zweiten Daten ermittelten Drehwinkels die Betriebsbedingungsdaten gewinnt

Insbesondere kann die Auswahleinrichtung dazu ausgebildet sein, die Signalverarbeitungseinrichtung dazu zu veranlassen, den Drehwinkel der Welle durch eine Mittelung der von der optischen Sensoreinrichtung und von der Magnetsensoreinrichtung gelieferten Daten zu ermitteln bzw. eine Mittelung des mithilfe der ersten Daten (von der optischen Sensoreinrichtung) ermittelten Drehwinkels und des mithilfe der zweiten Daten (von der Magnetsensoreinrichtung) ermittelten Drehwinkels vorzunehmen, um einen gemittelten Drehwinkel zur weiteren Verarbeitung (z. B. Überwachung, Steuerung, Regelung) bereitzustellen. Eine solche Mittelung kann mithilfe von Gewichten erfolgen, die wiederum nach Maßgabe aktueller, durch eine entsprechende Einrichtung bestimmter, Betriebsbedingungen vorgenommen werden kann.

Während in den obigen Weiterbildungen der erfindungsgemäßen Drehgebervorrichtung eine optische Sensoreinrichtung und eine Magnetsensoreinrichtung umfasst sind, können prinzipiell auch andere Sensor(Detektions)einrichtungen Verwendung finden, die auf physikalisch unterschiedliche Weisen Daten über den Drehwinkel gewinnen. Somit wird hierin auch eine Drehgebervorrichtung zur Abtastung einer Welle zur Verfügung gestellt, welche umfasst
eine erste Detektionseinrichtung, die dazu ausgebildet ist, erste Daten über einen Drehwinkel der Welle auf eine erste Weise zu gewinnen;
eine zweite Detektionseinrichtung, die dazu ausgebildet ist, zweite Daten über den Drehwinkel der Welle auf eine zweite Weise zu gewinnen, die von der ersten Weise unterschiedlich ist;
eine Signalverarbeitungseinrichtung, die dazu ausgebildet ist, die ersten Daten von der ersten Detektionseinrichtung und die zweite Daten von der zweiten Detektinonseinrichtung zu empfangen und aus den empfangenen ersten Daten einen (ersten) Drehwinkel der Welle zu ermitteln und aus den empfangenen zweiten Daten einen (zweiten) Drehwinkel der Welle zu ermitteln.

Dadurch, dass die Daten auf physikalisch unterschiedliche Weisen gewonnen werden, ist die gewünschte erhöhte Zuverlässigkeit der Messungen gewährleistet. Die erste Detektionseinrichtung kann beispielsweise aus der Gruppe einer potentiometrischen Drehwinkel-Detektionseinrichtung, einer induktiven Drehwinkel-Detektionseinrichtung oder einer kapazitiven Drehwinkel-Detektionseinrichtung, wie sie im Stand der Technik bekannt sind, ausgewählt sein, und die zweite Detektionseinrichtung kann entsprechend eine andere Drehwinkel-Detektionseinrichtung aus dieser Gruppe oder eine optische oder magnetische Sensoreinrichtung, wie oben beschrieben, sein.

In dieser erfindungsgemäßen Drehgebervorrichtung, wie auch in den oben beschriebenen Weiterbildungen Drehgebervorrichtung mit eine optischen und einer magnetischen Sensoreinrichtung, können jeweils mehr als zwei der entsprechenden Sensor(Detektions)einrichtungen umfasst sein und verwendet werden, um die Redundanz weiter zu erhöhen. Insbesondere können drei oder mehr Sensor(Detektions)einrichtungen umfasst sein, die jeweils unterschiedliche physikalische Messmethoden realisieren.

Potentiometrische Drehwinkel-Detektionseinrichtungen umfassen Drehpotentiometer, bei denen die Widerstandsbahn aus einer gewickelten Drahtwendel, einer Kohleschicht, einer Leitplastikschicht oder einer Kombination aus Widerstandsdraht mit übergezogener Leitplastikschicht besteht. Bei gewickelten Drahtbahnen springt der Schleifer von einer Wendel auf die nächste, so dass sich die Widerstandswerte sprunghaft ändern.

Bei induktiven Drehwinkel-Detektionseinrichtungen wird die Winkeländerung über eine Änderung der Messinduktivität erfasst, die über die Permeabilität, indem ein Eisenkern in der Spule in Abhängigkeit vom Weg bzw. Winkel verschoben wird, oder über die Windungszahl N, ähnlich wie bei den potentiometrischen Drehgebern mit einem Schleifkontakt, erfolgt. Bei beiden Verfahren wird der Winkel durch die Messung einer Einzelinduktivität ermittelt. Es können Anordnungen aus mehreren Spulen Verwendung finden, in denen sich die Gegeninduktivitäten entsprechend ihrer Lage zueinander verändern. Solche Differentialmessverfahren haben gegenüber der Messung einer Einzelinduktivität den Vorteil, dass sie unempfindlicher auf Temperatureinflüsse, magnetische Störfelder und Schwankungen der Messspannung reagieren.

Kapazitive Drehwinkel-Detektionseinrichtungen arbeiten nach dem Prinzip des Drehkondensators. Durch Ändern der Fläche A wird die Kapazität C geändert. Beispielsweise können Differentialkondensatoren verwendet werden, die aus einer Rotor- und zwei getrennten Statorplatten bestehen.

Die oben im Zusammenhang mit der Drehgebervorrichtung, die eine optische Sensoreinrichtung und eine Magnetsensoreinrichtung umfasst, beschriebenen Merkmale der einzelnen Weiterbildungen (Messung des relativen und/oder absoluten Drehwinkels; Verbauung des Detektionseinrichtungen innerhalb eines einzelnen Gehäuses, Verwendung einer Auswahleinrichtung und/oder Betriebsbedingungsbestimmungseinrichtung usw.) können entsprechend auch von der Drehgebervorrichtung mit allgemein einer ersten und einer zweiten Detektionseinrichtung aufgewiesen werden.

Sämtliche Weiterbildungen der Drehgebervorrichtung können so ausgebildet sein, dass sie zwischen einem Messmodus zum Ermitteln des Drehwinkels und einem Diagnosemodus zu Diagnostizieren mindestens der optischen Sensorreinrichtung oder der Magnetsensoreinrichtung zu schalten in der Lage sind. So kann durch regelmäßiges oder unregelmäßiges, automatisches oder durch einen Nutzer bewirktes Umschalten von dem Messmodus (Betriebsmodus) auf den Diagnosemodus die Funktionsfähigkeit der optischen Sensorreinrichtung oder der Magnetsensoreinrichtung oder zeitgleich von beiden bestimmt werden, und je nach Diagnoseergebnis kann die eine oder die andere Sensoreinrichtung oder es können beide verwendet werden.

Die oben beschriebenen Beispiele können selbstverständlich analog auf Vorrichtungen zur Messung von Translationsbewegungen von Körpern übertragen werden. Somit wird zur Verfügung gestellt
eine Messvorrichtung zur Ermittlung der Position und/oder des Drehwinkels eines Körpers der eine Translations- und/oder Rotationsbewegung ausführt, umfassend
eine erste Detektionseinrichtung, die dazu ausgebildet ist, erste Daten über die Position und/oder den Drehwinkel des Körpers mit Hilfe eines ersten physikalischen Messverfahrens zu gewinnen,
eine zweite Detektionseinrichtung, die dazu ausgebildet ist, zweite Daten über die Position und/oder den Drehwinkel des Körpers mit Hilfe eines physikalischen zweiten

Messverfahrens, das sich von dem ersten physikalisch Messverfahren unterscheidet, zu gewinnen, eine Signalverarbeitungseinrichtung, die dazu ausgebildet ist, die ersten Daten von der ersten Detektionseinrichtung und die zweiten Daten von der zweiten Detektionseinrichtung zu empfangen und aus den ersten und/oder den zweiten Daten die Position und/oder den Drehwinkel des Körpers zu bestimmen.

Das erste und das zweite physikalische Messverfahren kann hierbei ein Messverfahren sein, das aus der Gruppe bestehend aus optischen Messverfahren, magnetischen Messverfahren, induktiven Messverfahren, kapazitiven Messverfahren und potentiometrischen Messverfahren, ausgewählt ist.

Es versteht sich für den Fachmann, dass eine Messung von Winkelgraden bei Rotationsbewegungen entsprechend durch eine Messung translatorischer Positionsänderung bei Translationsbewegungen zu ersetzen bzw. ergänzen ist.

Die oben im Zusammenhang mit der Drehgebervorrichtung, die eine optische Sensoreinrichtung und eine Magnetsensoreinrichtung umfasst, beschriebenen Merkmale der einzelnen Weiterbildungen (Messung des relativen und/oder absoluten Drehwinkels; Verbauung des Detektionseinrichtungen innerhalb eines einzelnen Gehäuses, Verwendung einer Auswahleinrichtung und/oder Betriebsbedingungsbestimmungseinrichtung usw.) können entsprechend auch von der Messvorrichtung zur Ermittlung der Position und/oder des Drehwinkels eines Körpers der eine Translations- und/oder Rotationsbewegung ausführt aufgewiesen werden. Des weiteren kann auch diese Messvorrichtung so ausgebildet sein, dass sie von einem Mess(Betriebs)modus in einen Diagnosemodus und umgekehrt schaltbar ist.

Sämtliche hierin beschriebenen Beispiele der erfindungsgemäßen Drehgebervorrichtungen können vorteilhafter Weise bei der Überwachung, Steuerung, Regelung beweglicher Achsen im Maschinenbau, insbesondere auch Kraftfahrzeugbau, und Anlagenbau Anwendung finden. Die mithilfe der erfindungsgemäßen Drehgebervorrichtungen bestimmten Drehwinkel können zu Positions-, Geschwindigkeits- und Beschleunigungsmessungen von beweglich, beispielsweise durch Motoren angetriebenen Objekten verwendet werden, in denen eine solche Drehgebervorrichtung verbaut ist. Somit stellt die vorliegende Erfindung auch ein Positionsbestimmungssystem oder Wegbestimmungssystem oder Geschwindigkeitsbestimmungssystem oder Beschleunigungsbestimmungssystem oder Regelungssystem oder Steuerungssystem, das eine Drehgebervorrichtung gemäß einem der oben beschriebenen Beispiele umfasst, zur Verfügung.

Weitere Merkmale und Vorteile der vorliegenden Erfindung werden im Weiteren mit Bezug auf die Zeichnungen beschrieben, die lediglich beispielhafte Ausführungsformen veranschaulichen und durchaus nicht den gesamten Umfang der Erfindung darstellen. Es versteht sich, dass die gezeigten Merkmale in anderen Kombinationen, als in den jeweiligen Beispielen beschrieben, im Rahmen der Erfindung Verwendung finden können.

Figur 1 zeigt ein Beispiel eines Drehgebers mit Zweikanal-Abtastung gemäß der vorliegenden Erfindung.

Figur 2 zeigt ein Blockdiagramm eines Drehgebers mit Zweikanal-Abtastung gemäß der vorliegenden Erfindung.

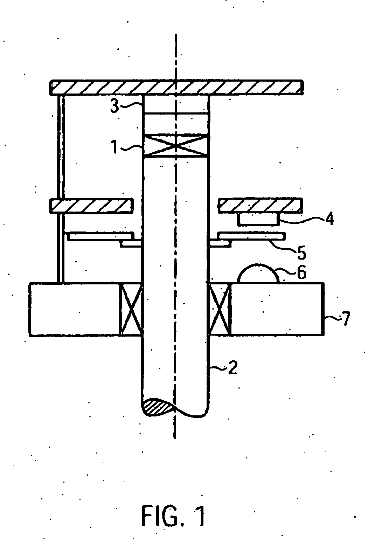

In dem in Figur 1 veranschaulichten Beispiel umfasst ein erfindungsgemäßer Drehgeber zur Abtastung einer mit einem Magneten 1 versehenen drehbaren Welle 2 einen Magnetsensor 3, einen optischen Sensor 4 mit einer anwenderspezifischen Schaltung, eine Codescheibe 5, die mit der Welle 2 verbunden ist, und eine Lichtquelle 6, die an einem Flansch 7 angebracht ist, in dem die Welle 2 drehbar gelagert ist. Die Lichtquelle 6 kann eine LED oder eine Glühlampe o. ä. sowie eine oder mehrere Linsen umfassen, und es kann Licht innerhalb oder außerhalb (z. B. infrarot oder ultraviolett) des sichtbaren Spektrum von dieser Lichtquelle 6 ausgesendet werden.

Insbesondere befinden sich in dem gezeigten Beispiel der magnetische 3 und optische 4 Sensor sowie die Codescheibe 5 und die Lichtquelle 6 vollständig in einem einzigen Gehäuse, wodurch die Konstruktion hinsichtlich des Platzbedarfs und der Kompaktheit vorteilhaft gestaltet werden kann.

In dem gezeigten Beispiel verläuft von der Lichtquelle 6 ausgesendetes Licht durch innerhalb von der sich mit der Welle 2 drehenden Codescheibe 5 vorgesehenen voneinander regulär beabstandeten Öffnungen zu dem bezüglich der sich drehenden Welle 2 ruhenden optischen Sensor 4.

Alternativ zu der in Figur 1 gezeigten Anordnung von Sensor 4, Codescheibe 5 und Lichtquelle 6 können der optische Sensor und die Lichtquelle auf einer Seite einer Impulsscheibe (Strichscheibe) mit reflektierenden und nicht-reflektierenden (weißen und schwarzen) Segmenten, die von dem Lichtstrahl der Lichtquelle abgetastet werden, angebracht sein.

Das Magnetfeld des sich mit der Welle 2 drehenden Magneten 1 wird durch den Magnetsensor 3, zum Beispiel einen Hall-Sensor oder einen magnetoresistiven Sensor, wie sie im Stand der Technik wohl bekannt sind, detektiert und in Sinus- und Cosinus-Signale gewandelt, die, gegebenenfalls nach einer Interpolationsverarbeitung, einer Auswerteelektronik zugeführt werden. Sowohl die von dem Magnetsensor 3 als auch die von dem optischen Sensor 4 bereitgestellten Signal können als elektrische Analogsignale oder nach entsprechender Verarbeitung innerhalb der jeweiligen Sensoreinrichtung als digitalisierte Daten einer Auswerteelektronik, beispielsweise einem oder mehreren Prozessoren, eingegeben werden. Die Daten des Magnetsensors 3 werden hierbei einem Kanal der Auswerteelektronik und die Daten des optischen Sensors 4 einem anderen Kanal der Auswerteelektronik zugeführt. Die Auswerteelektronik erhält somit vollständig unterschiedlich (optisch bzw. magnetisch) gewonnene und voneinander unabhängige Daten über den Drehwinkel der Welle.

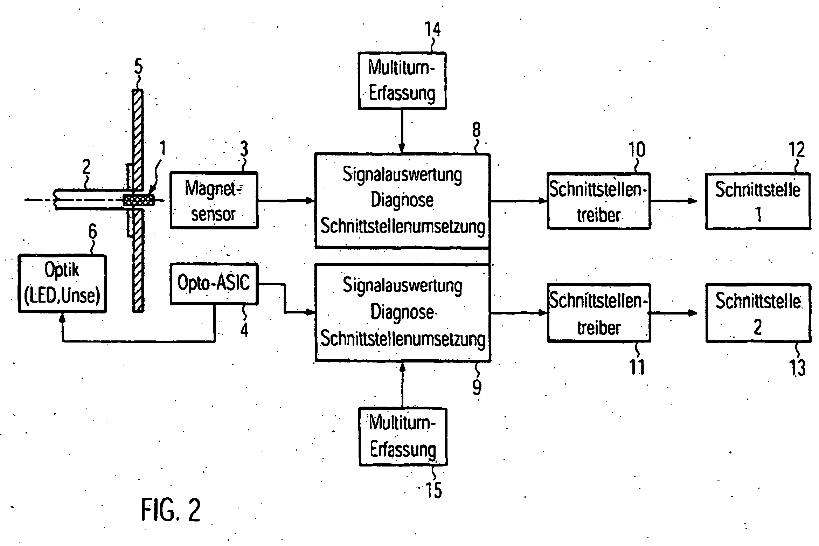

Der Datenfluss gemäß einem Beispiel für die hierin offenbarte Drehgebervorrichtung ist in Figur 2 veranschaulicht. Erfindungsgemäß wird die Drehung der Welle 2 mithilfe sowohl eines Magnetsensors 3 als auch eines optischen Sensors abgetastet 4. Der optische Sensor umfasst, wie in dem Beispiel von Figur 1, eine elektrische Schaltung, die gemäß den Anforderungen eines Anwender spezifiziert sein kann (Opto-ASIC). Abweichend von dem in Figur 1 gezeigten Beispiel ist in der in Figur 2 gezeigten Ausführungsform die optische und magnetische Sensorik nicht hintereinander (in Richtung der Welle) angeordnet, sondern kompakt räumlich gleichgeordnet. Zudem erstreckt sich der an der Welle befestigte Magnet 1 teilweise durch die an der Welle 2 befestigte Codescheibe 5.

Die von dem Magnetsensor 3 gewonnenen Daten werden einer ersten Verarbeitungseinheit 8 eingegeben, und die von dem optischen Sensor 4 gewonnenen Daten werden einer zweiten Verarbeitungseinheit 9 eingegeben. Die erste 8 und die zweite 9 Verarbeitungseinheit umfassen je eine Signalauswertungseinheit, eine Diagnoseeinheit sowie eine Einheit zur Umsetzung der Daten der Signalauswertung für jeweils einen Schnittstellentreiber 10 bzw. 11. Die Schnittstellentreiber 10 und 11 steuern jeweils eine Schnittstelle 12 bzw. 13 mit den Daten der Einheit zur Umsetzung der Daten der Signalauswertung an.

Die Kanäle für die Signalerfassung, die einerseits durch den Magnetsensor 3 und andererseits durch den optischen Sensor 4 erfolgt, die Signalverarbeitung in den Verarbeitungseinheiten 8 und 9 sowie die Signalausgabe an die Schnittstellen 12 und 13 über die SchnittStellentreiber 10 und 11 erfolgt also vollständig getrennte voneinander. Fehler oder ein Ausfall einer der Kanäle kann somit, zumindest zeitweilig, durch die Funktion des anderen der Kanäle kompensiert werden. Es sei außerdem darauf hingewiesen, dass die Versorgungsspannung für die beiden Kanäle getrennt voneinander bereitgestellt werden kann.

Jeder der Kanäle kann zusätzliche eine Multiturn-Erfassungseinrichtung 14,15 zur Bestimmung von Winkeldrehungen um mehr als 360° (also einerseits magnetisch und andererseits optisch) umfassen. Alternativ kann eine einzige Multiturn-Erfassungseinrichtung (magnetisch oder optisch) sowohl die Verarbeitungseinheit 8 als auch die Verarbeitungseinheit 9 mit Informationen über die Anzahl vollständiger Umdrehungen der Welle 2 versorgen. Es versteht sich, dass die Multiturn-Erfassungseinrichtung 14 und/oder die Multiturn-Erfassungseinrichtung 15 als Teil der Verarbeitungseinheit 8 bzw. 9 ausgebildet sein können. Des weiteren können die Verarbeitungseinheiten 8 und 9 in Form einer Computereinheit realisiert sein, auf welcher eine geeignete Software zur Datenverarbeitung laufen gelassen werden kann.

Die Konfiguration der Schnittstellentreiber 11 und 12 und/oder der Schnittstellen 12 und 13 kann variabel an die Bedürfnisse des Anwenders angepasst werden. Insbesondere können sie hinsichtlich einer Verbindung mit Sicherheitssystemen, die Profibus verwenden, und dem busgestützten Profinet-Sicherheitssystem, usw. konfiguriert sein.

Des weiteren können mehrere Schnittstellentreiber und Schnittstellen, z. B. zwei Schnittstellentreiber und Schnittstellen für jede Datenverarbeitungseinheit 8, 9, in jedem Kanal vorgesehen sein. Die Schnittstellen können analoge, digitale oder Funksschnittstellen sein. Die digitalen Schnittstellen können als parallele oder serielle Schnittstellen, SSI, ausgebildet sein. Hierbei können Feldbusse, z. B. CANOPEN, Profibus, oder ein Echtzeit ETHERNET, wie ProfiNet, ProfiSave, Verwendung finden.

## Patentansprüche

1. Drehgebervorrichtung zur Abtastung einer Welle (2), umfassend eine Magnetsensoreinrichtung (3), die dazu ausgebildet ist, das Magnetfeld einer bezüglich der Welle (2) ortsfesten magnetfelderzeugenden Einrichtung zu detektieren; eine Lichtquelle (6); eine optische Sensoreinrichtung (4), die dazu ausgebildet ist, Licht zu detektieren, das von der Lichtquelle (6) ausgesendet wird und von einer bezüglich der Welle (2) ortsfesten Codescheibe (5) reflektiert oder durchgelassen wird; eine Signalverarbeitungseinrichtung (8, 9), die dazu ausgebildet ist, erste Daten von der Magnetsensoreinrichtung (3) und zweite Daten von der optischen Sensoreinrichtung (4) zu empfangen und aus den empfangenen ersten Daten einen Drehwinkel der Welle (2) zu ermitteln und/oder aus den empfangenen zweiten Daten den Drehwinkel der Welle (2) zu ermitteln, **wobei** eine Auswahleinrichtung umfasst ist, die dazu ausgebildet ist, die Signalverarbeitungseinrichtung (8, 9) dazu zu veranlassen, wahlweise den Drehwinkel der Welle (2) aus den empfangenen ersten Daten und/oder den empfangenen zweiten Daten zu ermitteln und wobei die Auswahleinrichtung dazu ausgebildet ist, die Signalverarbeitungseinrichtung (8, 9) aufgrund ermittelter Betriebszustände, dazu zu veranlassen, wahlweise den Drehwinkel der Welle (2) aus den empfangenen ersten Daten und/oder den empfangenen zweiten Daten zu ermitteln, **wobei**
die ermittelten Betriebszustände eine Temperatur, eine Versorgungsspannung, oder eine Betriebsdauer, zumindest der Magnetsensoreinrichtung oder der optischen Sensoreinrichtung umfassen.

2. Drehgebervorrichtung gemäß Anspruch 1, **dadurch gekennzeichnet, dass** ein Gehäuse umfasst ist, in dem sowohl die Magnetsensoreinrichtung (3) als auch die optische Sensoreinrichtung (4) angeordnet sind.

3. Drehgebervorrichtung gemäß Anspruch 1 oder 2, **dadurch gekennzeichnet, dass** die Auswahleinrichtung dazu ausgebildet ist, die Signalverarbeitungseinrichtung (8, 9) dazu zu veranlassen, den Drehwinkel der Welle (2) aus einer Mittelung der empfangenen ersten Daten und der empfangenen zweiten Daten zu ermitteln.

4. Drehgebervorrichtung gemäß Anspruch 3, **dadurch gekennzeichnet, dass** die Auswahleinrichtung dazu ausgebildet ist, die Signalverarbeitungseinrichtung (8, 9) dazu zu veranlassen, eine Mittelung des aus den empfangenen ersten Daten ermittelten Drehwinkels der Welle (2), und des aus den empfangenen zweiten Daten ermittelten Drehwinkels der Welle (2) vorzunehmen.

5. Drehgebervorrichtung gemäß einem der vorherigen Ansprüche, **dadurch gekennzeichnet, dass** die Drehgebervorrichtung ausgebildet ist, zwischen einem Messmodus zum Ermitteln des Drehwinkels und einem Diagnosemodus zum Diagnostizieren mindestens der optischen Sensoreinrichtung oder der Magnetsensoreinrichtung zu schalten.

## Claims

1. Rotary encoding device for scanning a shaft (2), comprising a magnetic sensor device (3) which is designed to detect the magnetic field of a device which creates a magnetic field and which is stationary in relation to the shaft (2);
a light source (6);
an optical sensor device (4) which is designed to detect light which is emitted by the light source (6) and which is reflected or transmitted by a code disk (5) which is stationary in relation to the shaft (2);
a signal processing device (8, 9) which is designed to receive first data from the magnetic sensor device (3) and second data from the optical sensor device (4) and from the first data received to determine an angle of rotation of the shaft (2) and/or from the second data received to determine the angle of rotation of the shaft (2), whereby a selection device is comprised, which is designed to cause the signal processing device (8, 9) to optionally determine the angle of rotation of the shaft (2) from the first data received and/or the second data received, and whereby the selection device is designed to cause the signal processing device (8, 9) to optionally determine the angle of rotation of the shaft (2) from the first data received and/or the second data received, on the basis of the determined operational states, whereby the determined operational states comprise a temperature, a supply voltage, or an operating period, at least of the magnetic sensor device or of the optical sensor device.

2. Rotary encoding device in accordance with one of the above Claims, **characterized in that** it comprises a housing in which the magnetic sensor device (3) as well as the optical sensor device (4) are located.

3. Rotary encoding device in accordance with one of the above Claims, **characterized in that** the selection device is designed to cause the signal processing device (8, 9) to determine the angle of rotation of the shaft (2) from an averaging process of the first data received and the second data received.

4. Rotary encoding device in accordance with Claim 3, **characterized in that** the selection device is designed to cause the signal processing device (8, 9) to perform an averaging process of the angle of rotation of the shaft (2) determined from the first data received and of the angle of rotation of the shaft (2) determined from the second data received.

5. Rotary encoding device in accordance with one of the above Claims, **characterized in that** the rotary encoding device can be switched between a measuring mode to determine the angle of rotation and a diagnostic mode to diagnose at least the optical sensor device or the magnetic sensor device.

## Revendications

1. Dispositif de codeur permettant de détecter un axe (2), comprenant un dispositif de détecteur magnétique (3) conçu pour détecter le champ magnétique d'un dispositif générant un champ magnétique fixe par rapport à l'axe (2) ;
une source lumineuse (6) ;
un dispositif de détecteur optique (4), conçu pour détecter la lumière qui est émise par la source lumineuse (6) et est réfléchie ou transmise par un code de disque (5) fixe par rapport à l'axe (2) ;
un dispositif de traitement des signaux (8, 9), conçu pour recevoir des premières données de la part du dispositif de détecteur magnétique (3) et des secondes données de la part du dispositif de détecteur optique (4) et pour déterminer un angle de rotation de l'axe (2) à partir des premières données reçues et/ou l'angle de rotation de l'axe (2) à partir des secondes données reçues, dans lequel un dispositif de sélection est inclus, lequel est conçu pour permettre au dispositif de traitement des signaux (8, 9) de déterminer au choix l'angle de rotation de l'axe (2) à partir des premières données reçues et/ou des secondes données reçues et le dispositif de sélection étant conçu pour permettre au dispositif de traitement des signaux (8, 9), en raison des états de fonctionnement déterminés, de déterminer au choix l'angle de rotation de l'axe (2) à partir des premières données reçues et/ou des secondes données reçues_dans lequel les états de fonctionnement déterminés comprennent une température, une tension d'alimentation ou une durée de fonctionnement, au moins du dispositif de détecteur magnétique ou du dispositif de détecteur optique.

2. Dispositif de codeur selon l'une des revendications précédentes, **caractérisé en ce qu'**un boîtier est inclus, dans lequel sont disposés le dispositif de détecteur magnétique (3) ainsi que le dispositif de détecteur optique (4).

3. Dispositif de codeur selon l'une des revendications précédentes, **caractérisé en ce que** le dispositif de sélection est conçu pour permettre au dispositif de traitement des signaux (8, 9) de déterminer l'angle de rotation de l'axe (2) à partir d'une moyenne des premières données reçues et des secondes données reçues.

4. Dispositif de codeur selon la revendication 3, **caractérisé en ce que** le dispositif de sélection est conçu pour permettre au dispositif de traitement des signaux (8, 9) de procéder à une moyenne de l'angle de rotation de l'axe (2) déterminé à partir des premières données reçues et de l'angle de rotation de l'axe (2) déterminé à partir des secondes données reçues.

5. Dispositif de codeur selon l'une des revendications précédentes, **caractérisé en ce que** le dispositif de codeur peut être commuté entre un mode de mesure pour déterminer l'angle de rotation et un mode de diagnostic pour diagnostiquer au moins le dispositif de détecteur optique ou le dispositif de détecteur magnétique.
